# EUROPEAN PATENT APPLICATION

(11) **EP 2 380 469 A1**
(43) Date of publication of application: **26.10.2011**
(21) Application number: 11171789.8
(22) Date of filing: 17.07.2007
(51) Int. Cl.: A47J 27/21, H01R 13/52

(54) **Cordless electrical connector**

(30) Priority: 26.07.2006 GB 0614864; 21.12.2006 GB 0625675; 22.05.2007 GB 0709836
(62) Divisional of application: 07766271.6
(71) Applicant: Otter Controls Limited, Buxton Derbyshire SK17 7LF (GB)
(72) Inventor: Whiteley, Simon, Buxton, Derbyshire SK17 7LF (GB)
(74) Representative: Cross, James Peter Archibald

(57) **Abstract**

A 360° water-proof electrical connector (10) for a cordless appliance has current carrying contacts (1, 2, 3) and additional, signal-carrying contacts, at least the current carrying contacts (1, 2, 3) being sealed into the electrical connector.

## Description

### Field of the Invention

The present invention relates to a cordless electrical connector, and particularly, although not exclusively, to a cordless electrical connector for use with domestic appliances.

### Background of the Invention

In a cordless kettle, a water reservoir includes a cordless connector that is operable to cooperate with a corresponding connector on a power base. Thus, when the water reservoir is mounted on the power base, power may be supplied to a heating element located in the kettle jug to allow water therein to be heated.

Such arrangements allow a power base to be connected to a domestic power supply (such as by a plug), whilst further allowing the kettle jug to be removed from the base after the water is heated to allow a user to more easily dispense the water as required.

Further advances on cordless connectors have led to 360° connectors, as described for example in WO 94/06185.

The above types of cordless electrical connectors have also found use on other domestic appliances, such as food processors, blenders and the like. This arrangement provides an advantage that the processed/blended food can be more easily dispensed by a user.

However, as will be appreciated, appliances such as food processors, blenders and, to a lesser extent kettle jugs, need regular cleaning. In particular, cordless appliances for containing food or liquids other than water require cleaning after each use. Such a task is time consuming and may be difficult to perform manually.

Accordingly, it is desirable to provide a cordless connector that facilitates cleaning of an appliance. In particular, it would be desirable to provide a cordless appliance where the detachable part of the appliance can be washed in a dishwasher, by immersion in water or otherwise easily cleaned.

### Statements of the Invention

According to a first aspect of the present invention there is provided a cordless electrical connector assembly comprising: a cordless electrical connector; and a base component, wherein the assembly comprises a first seal that at least partially covers the current carrying components of the cordless electrical connector, and a second seal between the connector and the base component.

It is preferred that the cordless connector is a 360° electrical connector.

The connector may include means for retaining the second seal, such as a flange. The second seal may comprise a gasket seal arranged circumferentially around the connector.

The first seal may comprise a cover, made for example of an elastomer. At least a portion of the current carrying components of the electrical connector may be embedded within the elastomer cover.

The current carrying components may be formed within the electrical connector by insert moulding.

The base component may include drainage means, such as one or more apertures. The base component may comprise a skirt that surrounds the electrical connector.

The body of the electrical connector may comprise means to allow water that would otherwise be retained within the connector to drain away.

According to a second aspect of the present invention there is provided an electrical appliance comprising a 360° water-proof electrical connector.

Preferably the electrical connector comprises sealing means in which the current carrying components of the electrical connector are at least partially embedded. Alternatively, the appliance may comprise a fixed seal into which the electrical connector is fitted so as to cover the current carrying components of the connector. Alternatively, where the connector is formed by a moulding process, the current carrying components of the connector may be embedded in the connector during moulding.

A seal may be disposed between the appliance and the electrical connector. The seal may be a gasket seal mounted on a flange portion of the electrical connector. In a further preferred embodiment the electrical connector may be attached to the appliance using the Easyfix® method, as disclosed in GB-A-2330064.

However, in other preferred arrangements the seal may be retained by the appliance, and, on fitting of the connector, the electrical connector being urged against the seal. In further embodiments the seal may be made integral with either the appliance or the connector.

The seal between the appliance and the connector may be formed at either end of the connector.

It is particularly preferred that the appliance comprises a residual current protector. Such an arrangement is particularly preferred as it offers protection to a user against electric shock should the appliance become damaged. The residual current protector may be located in the appliance proper or within a power base associated therewith.

According to a third aspect of the present invention there is provided an electrical socket connector for an appliance, said connector comprising current carrying components operable to supply power to the appliance, wherein said current carrying components are at least partially embedded in a sealant, the connector further comprising means to allow a seal to be formed between said connector and the appliance.

Preferably the sealant is an elastomer cover. The elastomer cover may be moulded onto the connector.

It is preferred that the electrical socket connector further comprises a plug operable to fit within the connector, or to cover the connector. It is preferred that the plug is operable to prevent water gathering within the connector during a washing procedure.

As will be appreciated, the above described arrangements overcome problems associated with the prior art by allowing an appliance comprising a cordless electrical connection to be easily cleaned, for example by putting the appliance in a dish washer.

### Brief Description of the Drawings

In order that the present invention be more readily understood, specific embodiments thereof will now be described with reference to the accompanying drawings, a brief synopsis of which is set out below.
Figures 1a to 1e are different views of a first cordless electrical connector.
Figures 2a to 2e are different views of a second cordless electrical connector.
Figure 3 shows a further embodiment of the present invention.
Figure 4 shows the embodiment of figure 3, with the pieces thereof exploded out.
Figure 5 shows a variant embodiment of figure 3.
Figure 6 shows the embodiment of figure 5, with the pieces thereof exploded out.
Figure 7 shows the embodiment of figure 3 located within an appliance.
Figure 8a is an exploded view of a further embodiment of the present invention.
Figure 8b is a detail view of the embodiment of Figure 8a, when assembled.
Figure 9a is a perspective view of a further embodiment of the invention.
Figure 9b is a plan view of the embodiment of Figure 9a.
Figure 9c is a cross-sectional view in the plane A-A of Figure 9b.
Figure 10a is a perspective view of a further embodiment of the invention.
Figure 10b is a plan view of the embodiment of Figure 10a.
Figure 10c is a cross-sectional view in the plane A-A of Figure 10b.

### Detailed Description of Embodiments

The first embodiment is described in relation to a modified version of the applicant's CS4(CS7)/CP7 360° cordless electrical connector. Particulars of this connector can be found in WO 94/06185, the details of which are incorporated herein by reference. Details of this product may also be found on the applicant's website (www.ottercontrols.com).

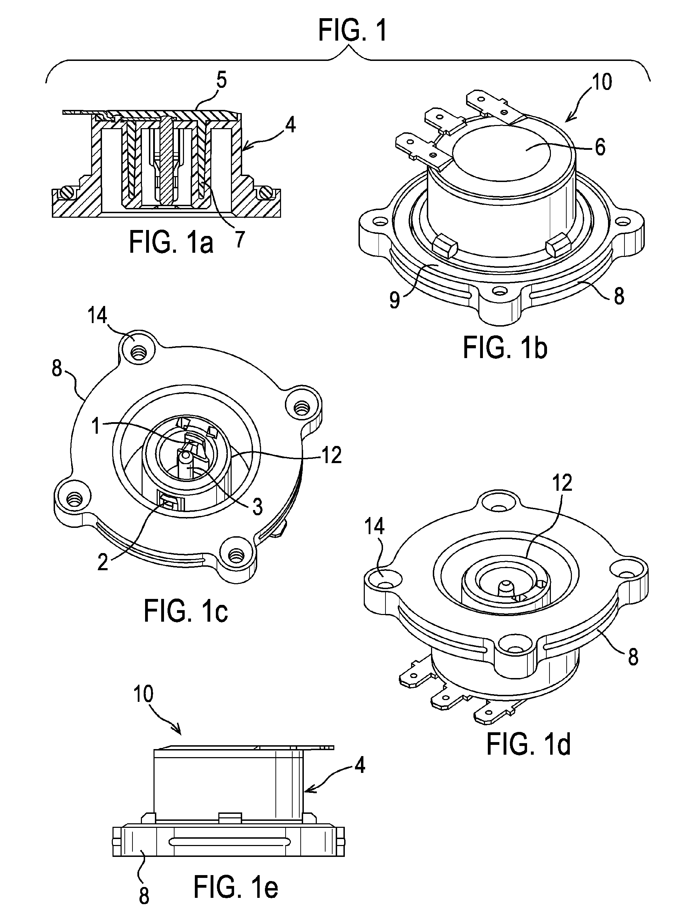

Figures 1a to 1e show an embodiment of the CP7 connector that, in use, is fitted to an electrical appliance, such as a kettle jug or food processor. The corresponding CS7 connector is fitted to a power base. Power may then be supplied to the electrical appliance by mounting the appliance onto the power base.

The main body 4 of the electrical connector 10 comprises an upper end 5, and a lower end defined by an aperture into which the corresponding CS7 electrical connector may fit. Figure 1c shows the electrical connectors: an earth pin 3 is formed in the centre of the aperture; an inner ring member 12 is formed in the aperture; a live connector 1 is formed on the inner surface of the inner member 12, and the neutral connector 2 is formed on the outer surface of the inner ring member 12.

It will be appreciated that the present invention is not limited to such arrangements, and that more or fewer connectors could be provided. For example, in some arrangements the controls for the appliance may be housed in the power base, with sensors or other components being housed in the appliance proper. In these arrangements it may be necessary to provide additional contacts in the connector system to allow control or other signals to be passed between the appliance proper and the power base control system. Particulars of such a control arrangement may be found in GB2228634.

In the first embodiment, the main body 4 of the electrical connector includes a flange 8 that is formed about the aperture at the lower end. The flange 8 comprises means 14 to allow the connector 10 to be securely fitted to an appliance, for example a series of holes through which screws may be placed. The flange 8 is operable to retain a gasket seal 9. In preferred embodiments the gasket seal takes the form of an o-ring. The gasket seal 9 is mounted on the side of the flange 8 remote from the aperture.

The top surface of the electrical connector 10 is enclosed by a cover 6. The cover is preferably an elastomer cover which seals the top surface, and also fills the cavities 7 that are present in a standard CP7 connector. The cover 6 is moulded onto the top of the component and embeds the current carrying parts at the upper end of the connector 10.

In an alternative embodiment the cover 6 may be insert moulded into the main body 4 of the connector 10. Thus, whilst the main body 4 is formed, and is still is a molten state, the current carrying components are embedded therein, and hence sealed. The cover 6 may be formed as an integral part of the main body 4.

An appliance to which the connector 10 is to be fitted is formed with a recess into which the connector 10 can be secured. The gasket seal 9 is thereby pressed between the appliance and the flange 8 to provide a watertight seal.

In a preferred arrangement the main body 4 may incorporate one or more drainage holes. Typically, when an appliance is washed in a dishwasher it is placed therein upside down. Accordingly, the connector 10 may fill with water during the washing process. The incorporation of drainage holes allows water that would otherwise be collected in the connector 10 to drain away.

The above described arrangement provides for the appliance, such as a food processor or kettle jug, to be placed into a dish washer for cleaning. The elastomer cover 5 and the gasket seal 9 provide for a water-proof integration of the connector with the appliance. The design of the present arrangement allows for large creepage distances, combined with good drainage of any residual water.

It will be appreciated that the above described electrical connector may be used in many different domestic appliances. Examples include food processors, blenders, kettles, coffee and espresso makers, juicers, smoothie makers, pans, sauce makers, steamers and milk frothers. It will be appreciated that the above list is not exhaustive.

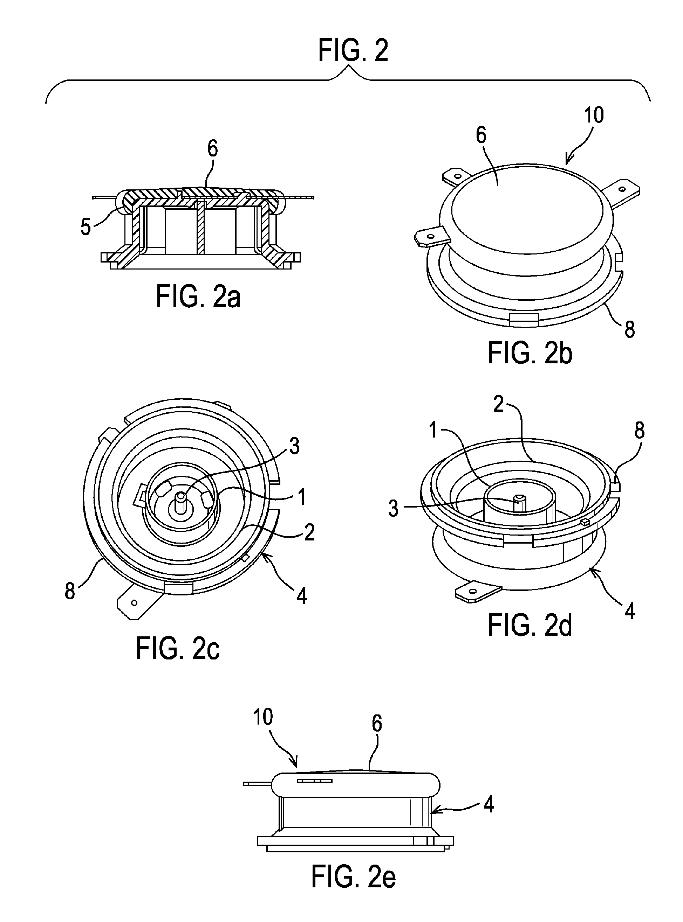

Figures 2a to 2e show a second embodiment of an electrical connector according to the present invention. This arrangement comprises a seal 6 provided at the upper end of the main body 4. This seal 6 is preferably an elastomer. A flange 8 is also preferably formed circumferentially about the lower end of the main body 4. The flange 8 is able to retain a gasket seal 9.

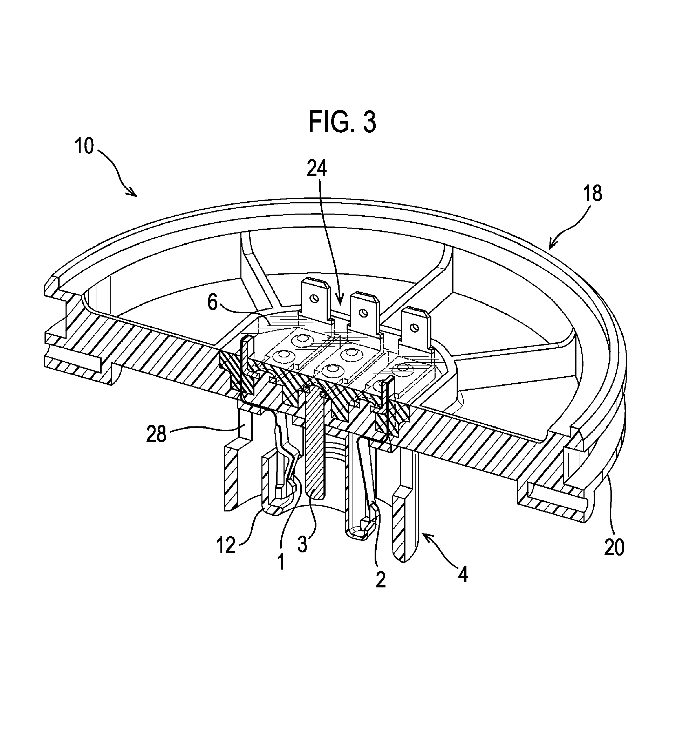

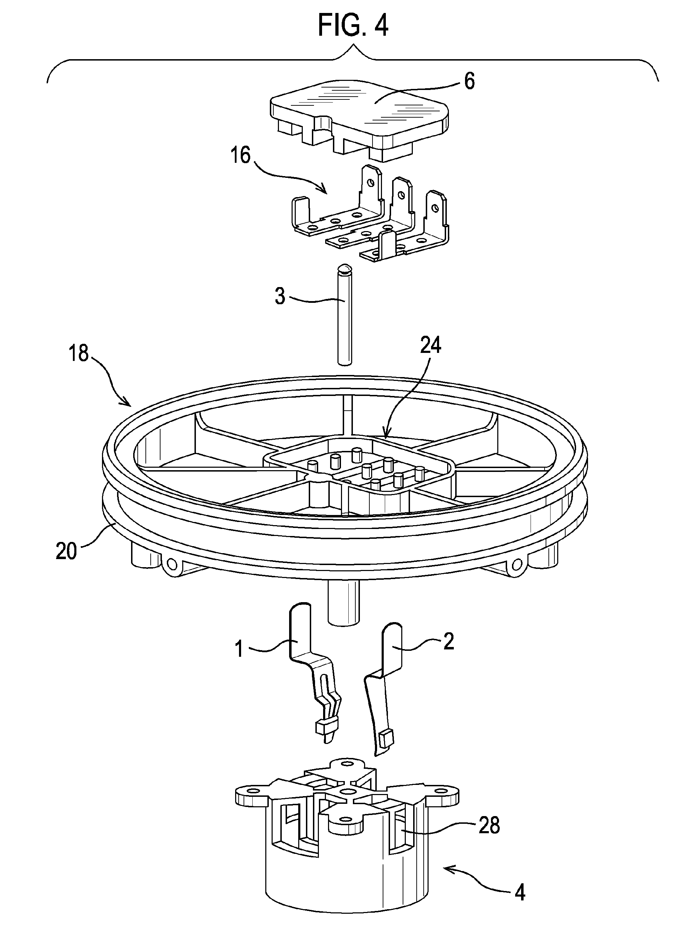

Figures 3 and 4 show a further modified version of a CP7 connector. The electrical connector 10 comprises a main body 4, with an upper end 5 and a lower end. The connector 10 further comprises an inner member 12. The lower end includes an aperture operable to cooperate with a power base connector, such as a CS7 power base connector. The upper end 5 includes a plurality of apertures through which the earth pin 3, and the live and neutral connectors 1, 2 protrude. The live and neutral connectors may be moving or static contacts.

The main body 4 of the connector 10 cooperatively fits with a member 18. Member 18 comprises an outer rim 20 operable to retain a seal and a central portion 24.

The central portion 24 houses the current carrying components 16 of the connector 10. Preferably the member 18 is moulded from plastic and the housing is formed in the moulding process: typically the housing may be a recessed area, or a section defined by a rim. However, it is also envisaged that it may be an area located on the member 18. The central portion 24 further comprises a plurality of apertures through which the earth pin 3 and the live and neutral connectors 2, 3 protrude. Accordingly, the current carrying components 16 are housed on the member 18 and the connector pins protrude through the member 18 and the main body 4, so as to be able to cooperate with corresponding connectors in the power base.

The central portion 24 of the member 18 is covered by a cover 6, which is preferably an elastomer cover.

In use, the member 18 is fitted to the bottom section of an appliance, and a seal, which is preferably a gasket seal, is pressed between the outer rim 20 of the member 18 8 and the appliance. The rim may releasably retain an o-ring, or a seal may be fixed thereto.

The main body 4 comprises one or more drainage apertures 28. Preferably these are located adjacent the upper end 5 of the connector 10, so that when the appliance is turned upside down, the drainage apertures 28 will be at the bottom of the main body 4, and hence aid drainage.

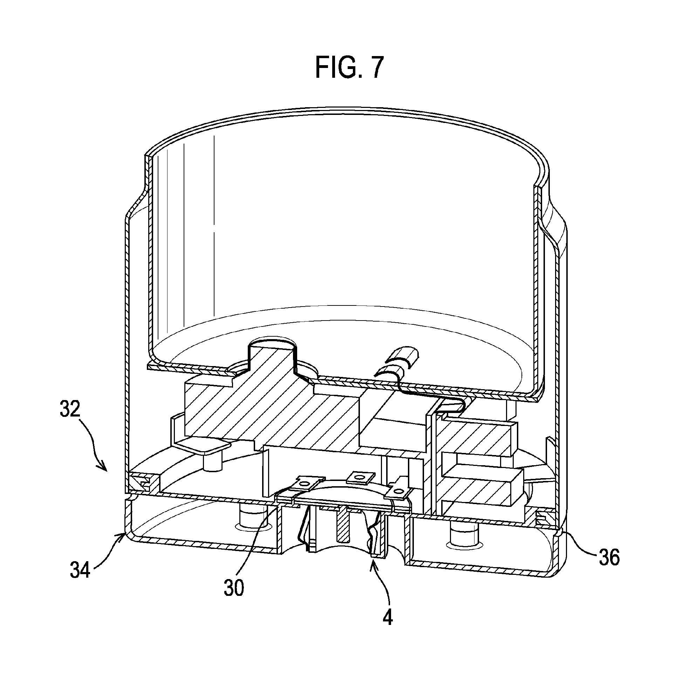

Referring to figure 7, the member 18 retains a seal, such as an o-ring, against an inner wall 30 of a bottom section 32 of an appliance. The combination of the elastomer cover 6, and the seal between member 18 and the appliance serves to water-proof the appliance, preferably so that the appliance is washable in a dishwasher.

The appliance further comprises a sub-base 34, such that the bottom surface of the main body 4 of the connector 10 is flush with the bottom of the appliance. The sub-base 34 comprises one or more drainage holes 36.

In use, water that collects in the connector 10 is able to drain through the drain apertures 28 in the main body 4, and out of the appliance through the apertures 36 in the sub-base 34.

In preferred embodiments the member 18 and the main body 4 may be integrated into a single unit, preferably moulded from plastic. In such an arrangement, the integrated connector body may incorporate drainage apertures that feed into corresponding drainage channels. The drainage channels feed into apertures in the sub-base, so as to allow collected water to drain away from the connector 10.

As with the first embodiment, the current carrying components 16 may be insert moulded into the member 18, rather than being sealed by a cover 5. Both arrangements are equally preferred.

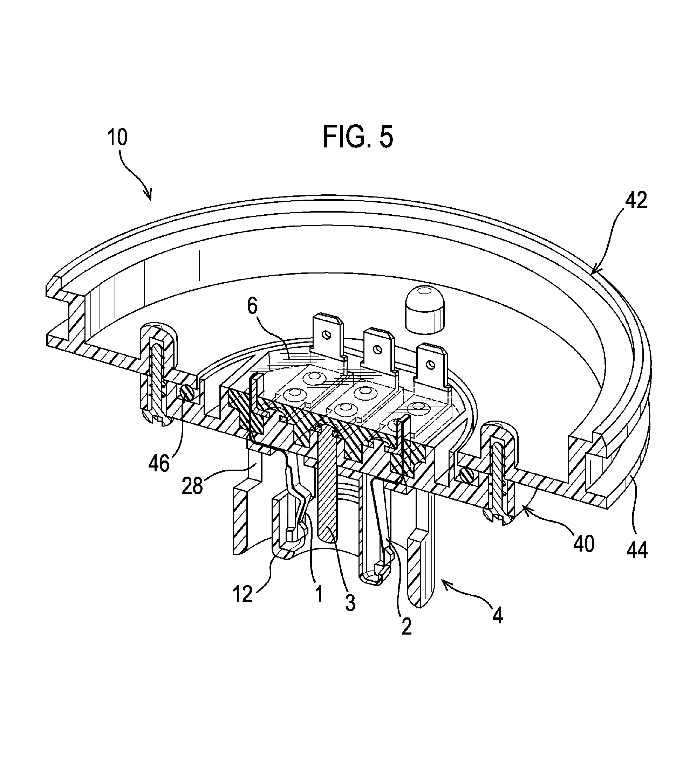

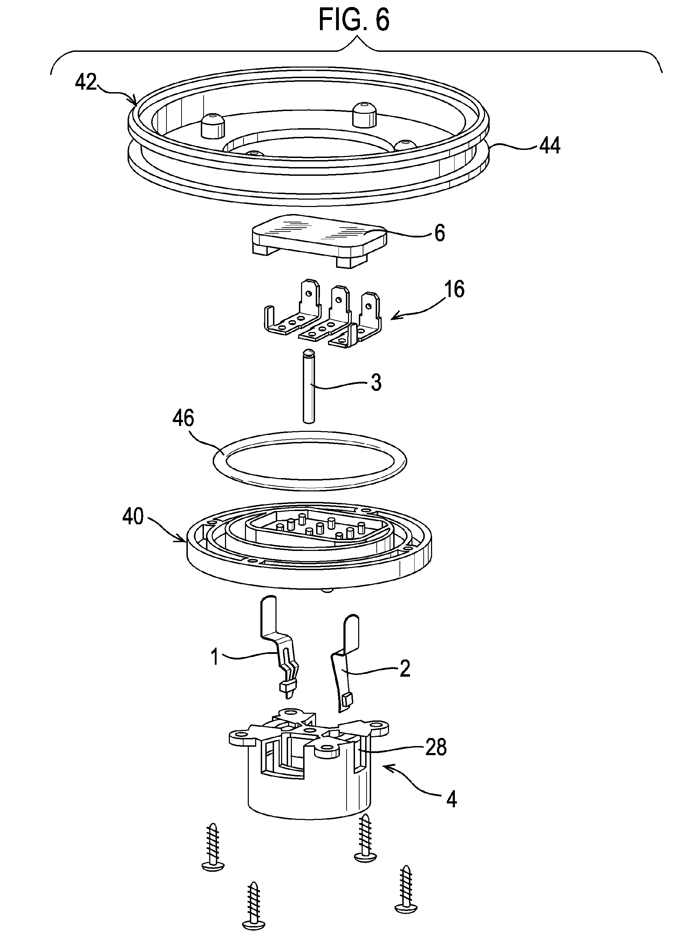

Figures 5 and 6 show an alternative embodiment of the present invention that is based upon the embodiment shown in figures 3 and 4. In this embodiment member 18 has been replaced with two members: inner member 40 and outer member 42. In the drawings, the two members 40, 42 are shown screwed together. However, it will be appreciated that any water-proof fixing method may be used.

The inner member 40 comprises a central portion 24 that houses the current carrying components 16 of the appliance in a similar way as described in relation to the second embodiment. The outer member 42 comprises an outer rim 44 that is operable to retain a seal and engage with an appliance to form a water-proof seal therebetween.

A further seal 46 is disposed between the inner member 40 and the outer member 42. This seal is preferably a gasket seal. It is also preferred that the seal is retained within a channel in the inner member. However, it will be appreciated that any retaining means would suffice.

In the embodiments of Figures 3 and 4, and of Figures 5 and 6, it can be seen that the central portion 24 is subdivided into sections for each of the current carrying portions, by an arrangement of low walls. These sections may alternatively be formed as discrete partitions, as will be described below.

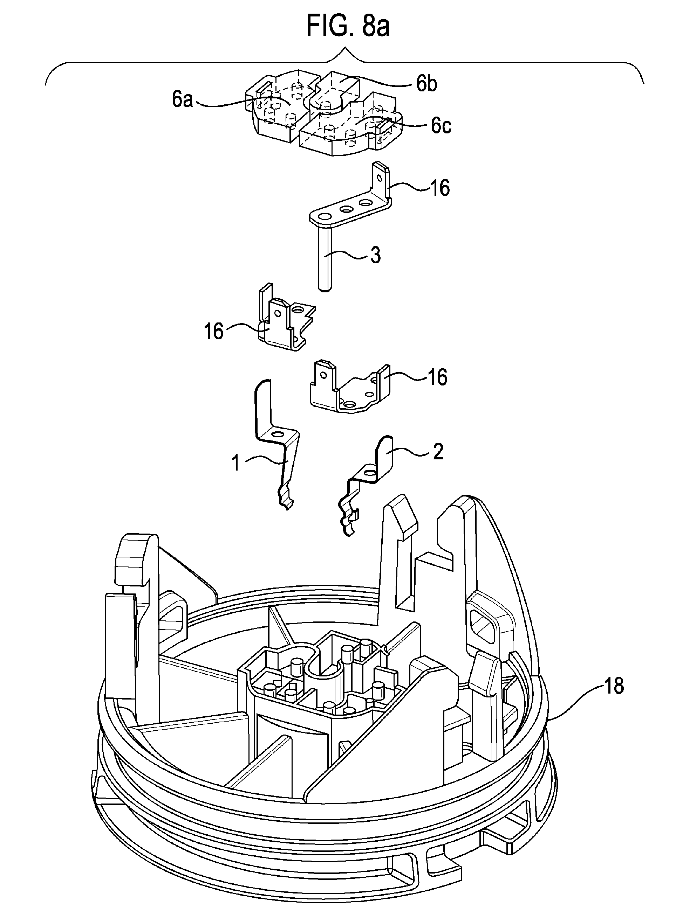

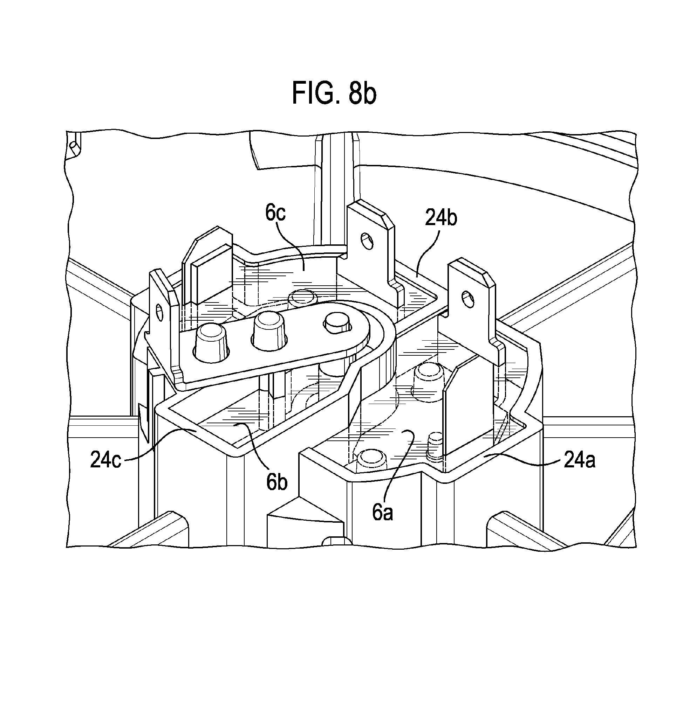

Figures 8a and 8b show a further embodiment of the invention that is similar to the embodiments of Figures 3 and 4 and that of Figures 5 and 6. However, in this embodiment each of the current carrying portions 16 in the top surface of the electrical connector 10 is enclosed in a discrete partition 24a, 24b, 24c within the central portion 24 of the member 18, and the seal 6 comprises corresponding discrete seals 6a, 6b, 6c which fit within the corresponding partitions 24a, 24b, 24c. Hence, the live, neutral and earth connectors are separately sealed, so that the risk of a short-circuit between connectors is reduced if one or more of the seals leaks, or breaks down.

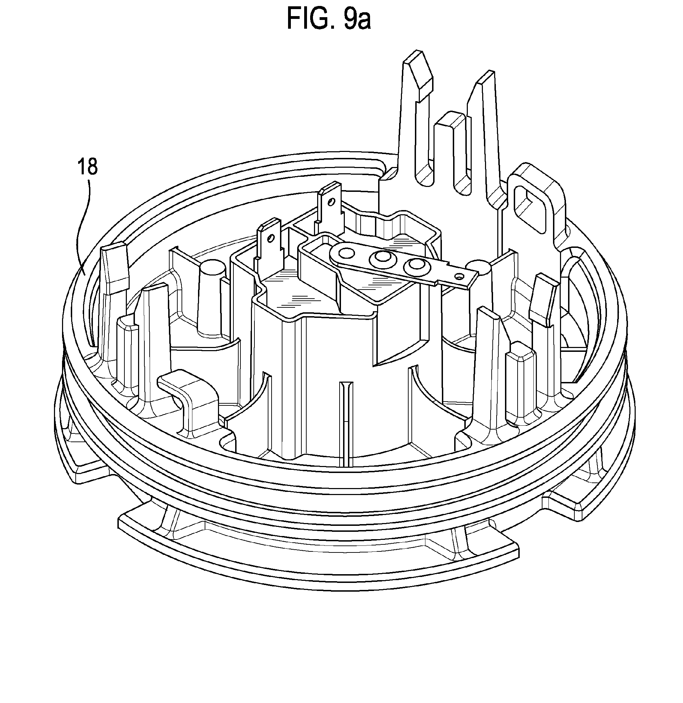

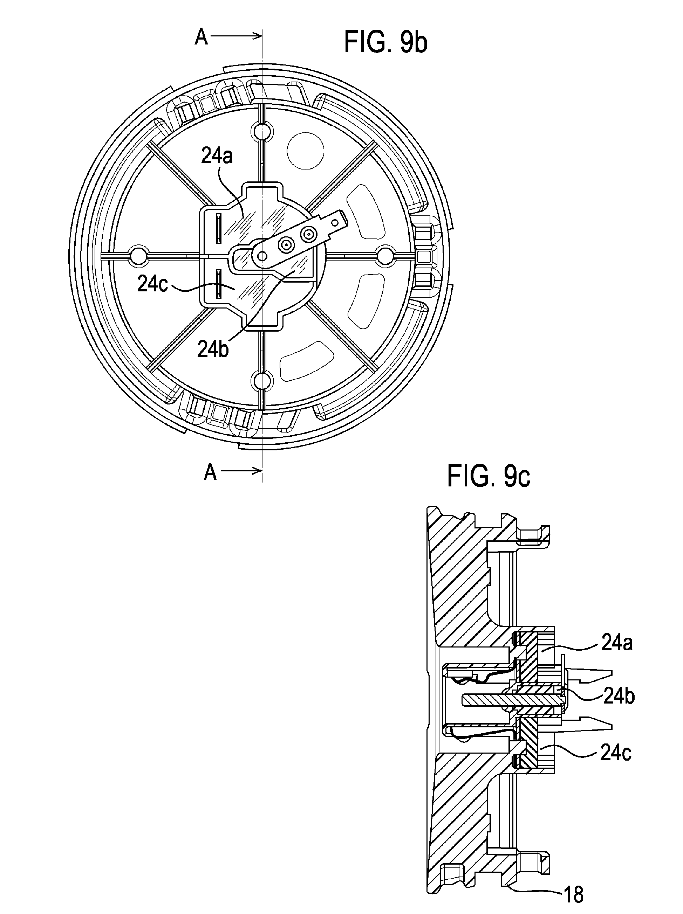

Figures 9a to 9c show a similar embodiment to that of Figures 8a and 8b; Figure 9c shows clearly in cross-section the separation of the central portion 24 into discrete partitions each containing a discrete seal 6a, 6b, 6c.

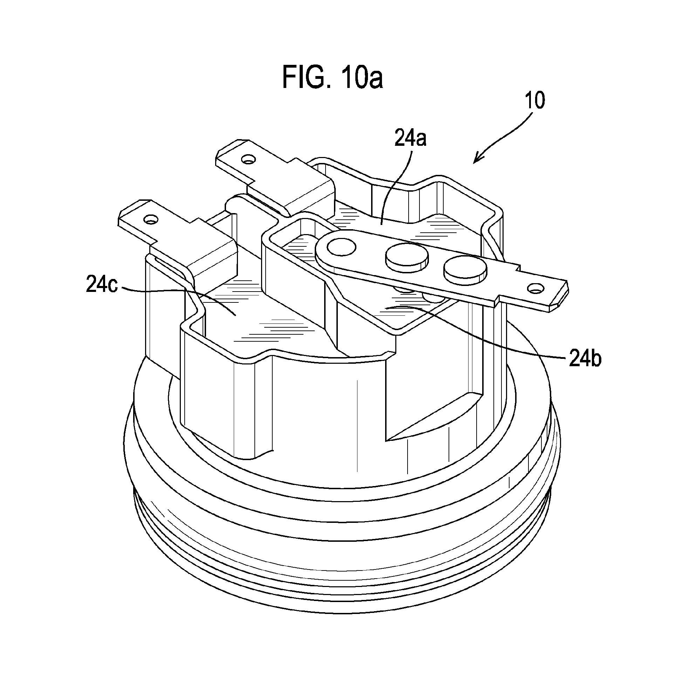

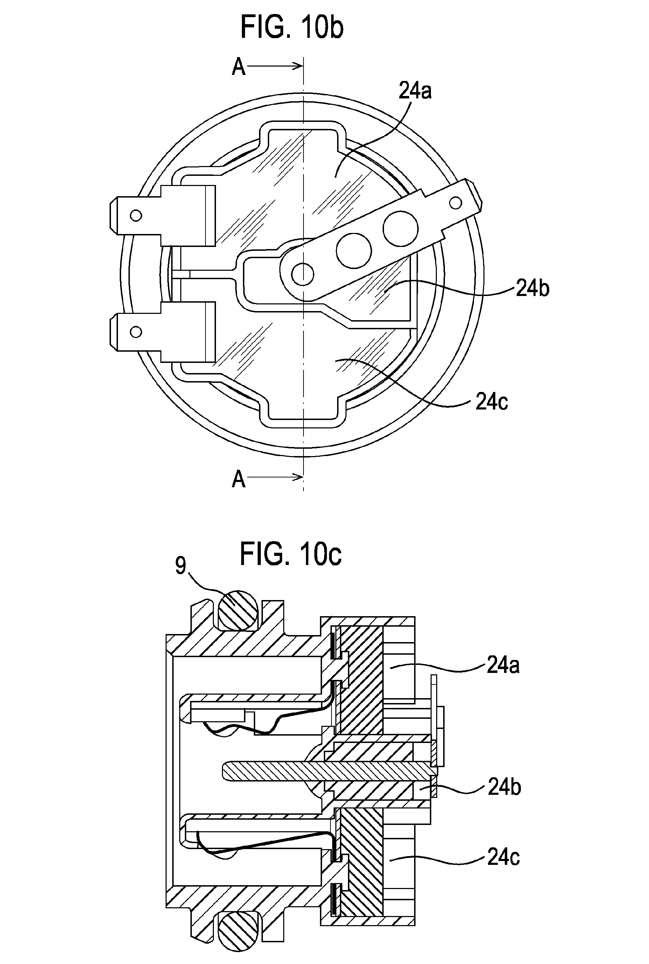

Figures 10a to 10c show an embodiment of a discrete connector similar to that of Figures 1 and 2, but with discrete partitions 24a, 24b, 24c and discrete seals 6a, 6b and 6c similar to those of the embodiments of Figures 8a and 8b and Figures 9a to 9c. Additionally, the gasket seal 9 is arranged to seal laterally against the appliance, rather than upwardly as in the embodiment of Figure 1.

In any of the embodiments of Figures 8 to 10, the discrete seals 6a, 6b and 6c may be formed before assemble, or alternatively by pouring a sealant in liquid form into the discrete partitions 24a to 24c and setting the sealant within the discrete partitions.

In all embodiments it is preferred that there is provided a plug operable to cooperate with a portion of the cordless electrical connector. The plug preferably fits within the aperture of the connector 10 to prevent water collecting therein during washing. In some embodiments the plug may be connected to the appliance. However, it is equally preferred that the plug is provided as a separate integer. As an alternative to the plug, there may be provided other means to close the aperture of the electrical connector, such as a sliding cover.

It is also preferred that a residual current protector is provided in either the appliance or the corresponding power base.

The electrical connection pins 1, 2 and 3 may be coated with an electrically conductive, relatively inert material, such as gold or silver plate, so as to reduced or overcome potential corrosion and/or galvanic reaction problems.

It will be appreciated that the above specific embodiments are described by way of reference only, and that many modifications and variations are possible within the scope of the enclosed claims.

### Additional Statements of Invention

Additional statements of invention are recited in the numbered clauses below.
1. A cordless electrical connector for an appliance, comprising a plurality of current carrying components for supplying power to the appliance, each of said current carrying components being sealed within the connector.
2. The cordless electrical connector of clause 1, wherein each of said current-carrying components is at least partially embedded in a sealant.
3. The cordless electrical connector of clause 2, wherein each of said current carrying components is at least partially embedded in a corresponding one of a plurality of discrete sealant portions.
4. The cordless electrical connector of clause 3, wherein each of said plurality of discrete sealant portions is contained within a corresponding one of a plurality of discrete partitions.
5. The cordless electrical connector of clause 4, wherein at least one of said discrete sealant portions is formed by setting a liquid sealant within the corresponding one of the discrete partitions.
6. The cordless electrical connector of clause 3, wherein at least one of said discrete sealant portions is formed before assembly into the connector.
7. The connector of any preceding clause, wherein the current carrying components are sealed within the electrical connector by insert moulding.
8. The connector of any preceding clause, including a cover to seal the current carrying components of the electrical connector.
9. The connector of any preceding clause, including drainage means for allowing water to drain away from the current carrying components.
10. The connector of any preceding clause, including means to cover or fill the electrical connector to inhibit the ingress of water during washing.
11. The connector of any preceding clause, including a seal for sealing against the appliance.
12. The connector of clause 11, wherein the seal is retained around the connector.
13. The connector of clause 11, wherein the seal is retained by a flange for connection to the appliance.
14. A base component for mounting on or in an appliance, including the connector of any one of clauses 1 to 10.
15. The base component of clause 14, comprising a skirt surrounding the connector.
16. The base component of clause 14 or clause 15, including a seal between the base component and the connector.
17. The base component of clause 14 or clause 15, wherein the base component is integrally formed with the connector.
18. The base component of any one of clauses 14 to 17, including drainage means.
19. The base component of clause 18, wherein the drainage means comprises at least one drainage aperture
20. An electrical appliance including the base component of any one of clauses 14 to 19.
21. An electrical appliance including the connector of any one of clauses 1 to 13.
22. The electrical appliance of clause 20 or clause 21, including one or more drainage apertures for draining water shed by the connector.
23. The electrical appliance according to clause 21 or clause 22, comprising a cordless appliance and a power base, wherein at least one control for the cordless appliance is housed in the power base.
24. An electrical appliance according to any one of clauses 20 to 23, further comprising a residual current protector.

## Claims

1. A 360° water-proof electrical connector (10) for a cordless appliance, the connector having current carrying contacts (1, 2, 3) and additional, signal-carrying contacts, at least the current carrying contacts (1, 2, 3) being sealed into the electrical connector.

2. A connector according to claim 1, wherein the current carrying contacts (1, 2, 3) are at least partially embedded in a sealant (6).

3. A connector according to any preceding claim, wherein the current carrying contacts (1, 2, 3) are sealed into the electrical connector (10) by insert moulding.

4. A connector according to any preceding claim, including a cover to seal the current carrying contacts (1, 2, 3) of the electrical connector (10).

5. A connector according to any preceding claim, wherein the current carrying contacts (1, 2, 3) are arranged to supply power to the appliance.

6. A connector according to any preceding claim, further comprising drainage means (28) for allowing water to drain away from the current carrying contacts (1, 2, 3).

7. An electrical appliance comprising a connector according to any preceding claim.

8. An electrical appliance according to claim 7, comprising a cordless appliance and a power base, wherein at least one control for the appliance proper is housed in the power base.

9. The electrical appliance of claim 8, wherein the signal-carrying contacts are arranged to allow signals to be passed between the cordless appliance and said control.

10. The electrical appliance of claim 9, wherein the signals include control signals.

11. The electrical appliance of claim 9 or 10, wherein the cordless appliance includes a sensor, and the signal-carrying contacts are arranged to carry signals from said sensor to the power base.

12. An electrical appliance according to any one of claims 7 to 11, wherein a seal (9) is disposed between the appliance and the connector (10).

13. An electrical appliance according to any one of claims 7 to 12, further comprising a residual current protector.

14. An electrical appliance according to any one of claims 7 to 13, wherein said appliance further comprises one or more drainage apertures for draining water shed by the connector (10).

15. The appliance of any preceding claim, comprising one of: a food processor, a blender, a kettle, a coffee maker, an espresso maker, a juicer, a smoothie maker, a pan, a sauce maker, a steamer and a milk frother.
